# EUROPÄISCHE PATENTANMELDUNG

(11) **EP 1 854 765 A1**
(43) Veröffentlichungstag der Anmeldung: **14.11.2007**
(21) Anmeldenummer: 07008329.0
(22) Anmeldetag: 24.04.2007
(51) Int. Cl.: C02F 1/32, C02F 3/22

(54) **Druckluftheber zum Abfördern von Klarwasser aus einer Kleinkläranlage**

(30) Priorität: 11.05.2006 DE 202006007524 U
(71) Anmelder: ATB Umwelttechnologien GmbH, 32457 Porta Westfalica (DE)
(72) Erfinder: Koppmann, Mirco, Dipl.-Ing., 32584 Löhne (DE)
(74) Vertreter: Steinmeister, Helmut

(57) **Zusammenfassung**

Druckluftheber (10,40) zum Abfordern von Klarwasser aus einer Kleinkläranlage mit einem in den Druckluftheber (10) integrierten UV-Desinfektionsreaktor mit einer UV-Strahlungsquelle (26) zur Desinfektion des den Druckluftheber (10) durchströmenden Klarwassers. Die Strahlungsquelle (26) kann stabförmig ausgebildet sein und ein rohr- oder schlauchförmiges Gehäuse (14) umfassen. Die Strahlungsquelle (26) kann konzentrisch innerhalb eines freien Strömungsquerschnitts des Gehäuses (14) angeordnet sein. Das Gehäuse (14) kann ein Kopfstück des Drucklufthebers (10,40) bilden.

## Beschreibung

Die vorliegende Erfindung betrifft einen Druckluftheber zum Abfördern von Klarwasser aus einer Kleinkläranlage, sowie eine Kleinkläranlage, die einen derartigen Druckluftheber umfaßt.

Kleinkläranlagen werden häufig zur Abwasserreinigung von Haushalten eingesetzt, die nicht an das öffentliche Kanalnetz angeschlossen sind. Üblicherweise umfassen solche Anlagen mehrere Kammern, wie etwa eine Absetz- und Vorklärkammer sowie die eigentliche Klärkammer, in welcher eine biologische Klärung des Abwassers stattfinden kann. Das Klarwasser kann anschließend mit Hilfe einer geeigneten Fördereinrichtung aus der Klärkammer abgepumpt werden. Wie in dem Gebrauchsmuster DE 201 05 661 U1 gezeigt ist, kann hierzu ein Druckluftheber verwendet werden, in dessen unteres Ende Druckluft eingeblasen wird, die das Klarwasser innerhalb des Drucklufthebers nach oben zu einem Ablauf befördert. Das abgeförderte Klarwasser kann anschlie-ßend in einen oberirdischen Vorfluter geleitet werden oder unterirdisch versickern.

Obwohl derartige Anlagen unter biochemischen Gesichtspunkten in der Regel zufriedenstellende Ergebnisse liefern, erfüllt die biologische Abwasserreinigung nicht immer den geforderten hygienischen Standard, da im gereinigten Wasser weiterhin noch Krankheitserreger vorhanden sein können. Kleinkläranlagen müssen strenge gesetzliche Anforderungen erfüllen, die Grenzwerte für die Belastung durch pathogene Keime vorgeben. Insbesondere ist dies in der Nähe von Trinkwasserentnahmestellen oder bei der Einleitung des Klarwassers in ein Badegewässer problematisch. Es müssen daher zusätzliche Maßnahmen getroffen werden, um das Klärergebnis weiter zu verbessern. Die Anbringung zusätzlicher Aggregate zur weiteren Hygienisierung des Klarwassers ist jedoch verhältnismäßig aufwendig und führt zu weiteren Problemen wie etwa einem gesteigerten Platzbedarf. Ferner ist die Einrichtung einer dem Druckluftheber nachgeschalteten zusätzlichen Hygienisierungsstufe unerwünscht, da das Klarwasser möglichst unmittelbar und ohne Zeitverlust in die Umgebung abgefördert werden soll.

Im Zusammenhang mit den bekannten Drucklufthebern ist für die vorstehend beschriebenen Probleme noch keine Lösung bekannt.

Aufgabe der vorliegenden Erfindung ist es daher, einen Druckluftheber für Kleinkläranlagen der eingangs genannten Art zu schaffen, der eine zusätzliche Hygienisierung des biologisch vorgeklärten Wassers ohne Zeitverlust, platzsparend und mit verhältnismäßig geringem Aufwand ermöglicht.

Diese Aufgabe wird erfindungsgemäß durch einen Druckluftheber gemäß Anspruch 1 gelöst.

In den erfindungsgemäßen Druckluftheber ist ein UV-Desinfektionsreaktor integriert, der eine UV-Strahlungsquelle umfaßt und zur Desinfektion des den Druckluftheber durchströmenden Klarwassers mittels ultravioletter Strahlung dient. Die in dem Klarwasser noch enthaltenen Mikroorganismen und Krankheitskeime werden durch das UV-Licht wirksam abgetötet, ohne dass Rückstände oder chemische Nebenprodukte im Wasser verbleiben. Auf diese Weise ist es möglich, das Klarwasser so zu behandeln, dass es auch verhältnismäßig strengen Anforderungen an die hygienische Wasserqualität genügt. Durch die Integration in den Druckluftheber wird praktisch kein zusätzlicher Platz benötigt, und weitere Probleme bezüglich der Montage usw. werden vermieden. Durch die Nutzung eines gemeinsamen Gehäuses kann sich ferner eine einfache und kostengünstige Konstruktion ergeben. Die Hygienisierung des biologisch vorgeklärten Klarwassers erfolgt ohne Zeitverlust während des Abförderns durch den Druckluftheber, so dass das Klarwasser unmittelbar aus der Klärkammer durch den Druckluftheber in die Umgebung abgefördert werden kann.

Weitere Ausgestaltungen des erfindungsgemäßen Drucklufthebers ergeben sich aus den Unteransprüchen 2 bis 8.

Anspruch 9 ist auf eine Kleinkläranlage gerichtet, die den erfindungsgemäßen Druckluftheber umfaßt.

Im folgenden werden bevorzugte Ausführungsbeispiele der Erfindung anhand der beigefügten Zeichnung näher erläutert.
- Figur 1: zeigt schematisch den Aufbau eine Drucklufthebers, der eine erste Ausführungsform der vorliegenden Erfindung darstellt; und
- Figur 2: zeigt schematisch eine zweite Ausführungsform des erfindungsgemäßen Drucklufthebers.

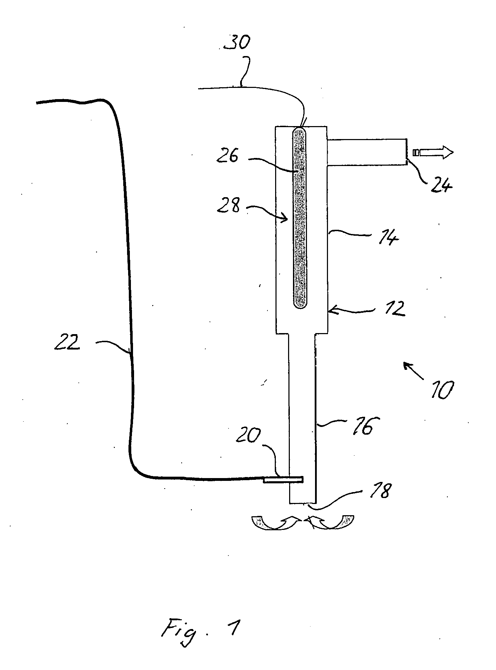

Der in Figur 1 dargestellte Druckluftheber 10 dient zum Abfördern von Klarwasser aus dem Klärbecken einer nicht näher dargestellten Kleinkläranlage. Er umfaßt ein rohrförmiges Gehäuse 12, das aufrecht innerhalb des Klärbekkens angeordnet ist, d. h., die Rohrachse steht senkrecht, entsprechend der Orientierung in der Figur. Das Gehäuse 12, das einen zylindrischen Querschnitt aufweist, umfaßt einen oberen Abschnitt, der ein Kopfstück 14 bildet, sowie einen unteren Abschnitt 16 kleineren Durchmessers, der sich an das untere Ende des Kopfstücks 14 anschließt. Die untere Stirnseite des unteren Gehäuseabschnitts 16 ist offen und bildet einen Klarwasser-Einlaß 18, durch welchen das Klarwasser, in welches der Druckluftheber 10 eingetaucht ist, in das Gehäuse 12 einströmen kann. Ferner ist in der Wand des Gehäuseabschnitts 16 unmittelbar oberhalb des Klarwasser-Einlasses 18 ein Druckluftanschluß 20 vorgesehen, durch welchen Druckluft von einer nicht dargestellten Quelle wie einem Kompressor über eine Luftleitung 22 in den Gehäuseabschnitt 16 eingeblasen werden kann.

An das obere Ende des Kopfstücks 14 ist seitlich ein Klarwasser-Auslaß 24 angeformt, durch welchen der Inhalt des Gehäuses 12 nach außen abgefördert werden kann.

Innerhalb des Gehäuses 12, nämlich im Kopfstück 14, ist eine UV-Strahlungsquelle 26 angeordnet, die dazu dient, das den Druckluftheber 10 durchströmende Klarwasser zusätzlich zu desinfizieren. Die UV-Strahlungsquelle 26 ist stabförmig ausgebildet und erstreckt sich axial vom oberen Ende des Kopfstücks 14 entlang seiner Rohrachse nach unten in dieses hinein. Die UV-Strahlungsquelle 26 ist damit konzentrisch innerhalb des freien Strömungsquerschnitts des Kopfstücks 14 angeordnet, der die Strahlungsquelle 26 ring- bzw. zylinderförmig umgibt. Durch die zentrale Anordnung im Kopfstück 14 kann ultraviolettes Licht, das von der UV-Strahlungsquelle 26 emittiert wird, das den Strömungsquerschnitt des Kopfstücks 14 durchströmende Klarwasser gut durchdringen.

Ein Anschlußkabel 30, das von der oberen Stirnseite her in das Kopfstück 14 eingeführt ist, dient zur Versorgung der UV-Strahlungsquelle 26 mit elektrischem Strom.

Der obere Abschnitt des Innenraums des Gehäuses 12, in welchem die UV-Strahlungsquelle 26 angeordnet ist, bildet somit einen UV-Desinfektionsreaktor 28, der in den Druckluftheber 10 integriert ist und dessen Gehäuse das Kopfstück 14 bildet.

Als besonders wirkungsvoll zur Keimabtötung hat sich eine Wellenlänge der UV-Strahlungsquelle im Bereich von etwa 100 nm bis 280 nm erwiesen. Dies entspricht dem allgemein mit UV-C bezeichneten Spektralbereich. Besonders vorteilhaft ist eine Wellenlänge von 254 nm.

Der Druckluftheber 1.0 in Figur 1 arbeitet wie folgt.

Am unteren Ende des Gehäuses 12 strömt Klarwasser durch den Einlaß 18 ein. Wird über den ebenfalls am unteren Ende des Gehäuses 12 befindlichen Druckluft-Anschluß 20 Druckluft eingeblasen, so fördern die nach oben steigenden Luftblasen das Klarwasser innerhalb des Gehäuses 12 nach oben. Das aufsteigende Luft-Wasser-Gemisch kann am oberen Ende des Drucklufthebers 10 durch den Klarwasser-Auslaß 24 entweichen. Während seines Wegs durch das Gehäuse 12 passiert das Klarwasser das Kopfstück 14, das den UV-Desinfektionsreaktor 28 umfaßt und wird durch die ultraviolette Strahlung desinfiziert. Das aus dem Auslaß 24 austretende Klarwasser ist somit praktisch keimfrei.

Da das Kopfstück 14 einen größeren Innendurchmesser aufweist als der Gehäuseabschnitt 16, ein Teil der Querschnittsfläche des Kopfstücks 14 jedoch von der UV-Strahlungsquelle 26 beansprucht wird, können die Innendurchmesser des Kopfstücks 14 und des unteren Gehäuseabschnitts 16 auf solche Weise bemessen sein, dass der verbleibende freie Strömungsquerschnitt in beiden Gehäuseabschnitten 14,16 gleich ist. Der Volumenstrom durch das Gehäuse 12 des Drucklufthebers 10 kann durch eine nicht näher dargestellte Steuereinrichtung gesteuert werden, die beispielsweise die Druckluftzufuhr über den Druckluft-Anschluß 20 bestimmt. Auf diese Weise kann der Volumenstrom an die Kapazität des UV-Desinfektionsreaktors 28 angepaßt werden, so dass die Desinfektion des Klarwassers möglichst vollständig durchgeführt wird. Die erwähnte Steuereinrichtung kann in diesem Sinne auch zur Steuerung der Intensität der UV-Strahlungsquelle 26 eingesetzt werden. Volumenstrom und UV-Strahlungsintensität können somit aufeinander abgestimmt werden.

Abweichend von der hier dargestellten Ausführungsform sind auch andere Anordnungen der UV-Strahlungsquelle 26 im UV-Desinfektionsreaktor 28 bzw. im Kopfstück 14 denkbar.

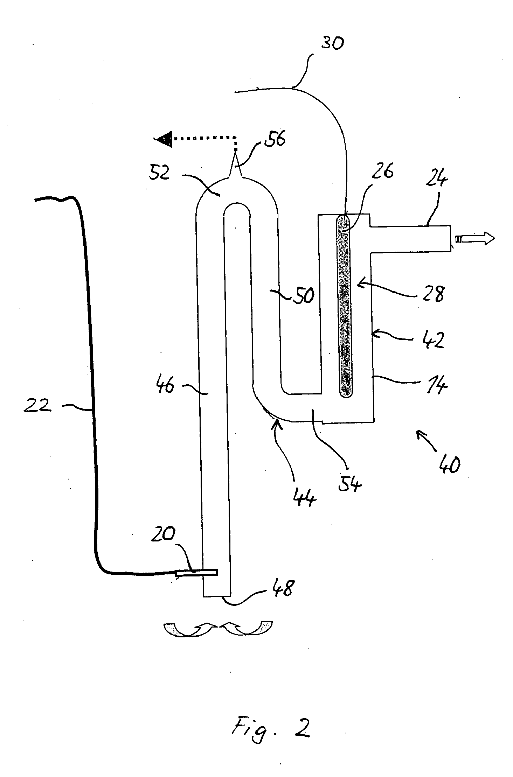

Der in Figur 2 dargestellte Druckluftheber 40 ist gegenüber dem zuvor beschriebenen Druckluftheber 10 bezüglich der Form seines Gehäuses, der Anordnung des Klarwasser-Einlasses und des Förderprinzips abgewandelt. Vergleichbare Teile sind in den Figuren 1 und 2 mit gleichen Bezugsziffern bezeichnet. Der Druckluftheber 40 umfaßt demnach ein Gehäuse 42, das wie der Druckluftheber 10 ein Kopfstück 14 mit zylindrischem Querschnitt aufweist, an dessen oberem Ende seitlich ein Klarwasser-Auslaß 24 angeformt ist. Innerhalb des Kopfstücks 14 ist eine stabförmige UV-Strahlungsquelle 26 angeordnet, die zur Desinfektion des Klarwassers dient, welches das Kopfstück 14 von unten nach oben zum Auslaß 24 durchströmt. Das Kopfstück 14 bildet somit das Gehäuse eines UV-Desinfektionsreaktors 28 zur Hygienisierung des Klarwassers durch ultraviolettes Licht. Die Anordnung der UV-Strahlungsquelle 26 im Reaktor 28 entspricht der ersten Ausführungsform des Drucklufthebers 10 in Figur 1, so daß auf eine nähere Beschreibung in diesem Zusammenhang verzichtet werden kann.

An das untere Ende des Kopfstücks 14 ist ein Siphon 44 angeschlossen, der einen weiteren Abschnitt des Gehäuses 42 des Drucklufthebers 40 bildet und durch welchen das Klarwasser in das Kopfstück 14 einströmen kann. Der Siphon 44 umfaßt einen längeren Rohrabschnitt 46, der parallel zum Kopfstück 14 liegt und dessen unteres Ende einen Klarwasser-Einlaß 48 bildet, durch welchen das Klarwasser aus der Umgebung in den Siphon 44 eindringen kann. Der Siphon 44 umfaßt ferner einen kürzeren Rohrabschnitt 50, der parallel zum längeren Rohrabschnitt 46 und dem Kopfstück 14 verläuft und an seinem oberen Ende durch einen kreisförmig gekrümmten Rohrabschnitt, der im folgenden als Knie 52 bezeichnet wird, mit dem oberen Ende des längeren Rohrabschnitts 46 verbunden ist. Der längere Rohrabschnitt 46 und der kürzere Rohrabschnitt 50 des Siphons 44 bilden somit zwei Schenkel des U-förmigen Siphons 44, die durch das Knie 52 verbunden sind. Das untere Ende des kürzeren Rohrabschnitts 50 ist seitlich abgewinkelt und an das untere Ende des Kopfstücks 14 angeschlossen, so daß es einen Klarwasser-Anschluß 54 des Siphons 44 am Kopfstück 14 bildet.

Ferner ist unmittelbar oberhalb des Klarwasser-Einlasses 48 im langen Rohrabschnitt 46 ein Druckluftanschluß 20 vorgesehen, durch welchen Druckluft über eine Luftleitung 22 in den Siphon 44 eingeblasen werden kann. Die im längeren Rohrabschnitt 46 entstehenden Luftblasen steigen bis zum Knie 52 auf und fördern das Klarwasser, das durch den Klarwasser-Einlaß 48 in den Siphon 44 eindringt, nach oben. Auf diese Weise wird das Klarwasser durch das Knie 52 in den kürzeren Rohrabschnitt 50 gefördert, während die Druckluft durch eine Entlüftungsöffnung 56 am obersten Punkt des Knies 52 entweichen kann. Das Klarwasser kann in freiem Gefälle aus dem bis zum Knie 52 gefüllten kürzeren Rohrabschnitt 50 des Siphons 44 durch den Klarwasser-Anschluß 54 unten in das Kopfstück 14 einströmen, passiert den freien Strömungsquerschnitt des UV-Desinfektionsreaktors 28, wird hierin durch die ultraviolette Strahlung der UV-Strahlungsquelle 26 desinfiziert und gelangt zum Klarwasser-Auslaß 24. Da das Knie 52 höher gelegen ist als der Klarwasser-Auslaß 24, kann im kürzeren Rohrabschnitt 50 stets ein Staudruck erzeugt werden, der für die zuvor beschriebene Strömung des Klarwassers durch das Kopfstück 14 sorgt.

Aus der vorstehenden Beschreibung ergibt sich, daß gegenüber der ersten Ausführungsform der Drucklufthebers 10 das Förderprinzip in der zweiten Ausführungsform leicht abgewandelt worden ist, indem der untere Abschnitt 16 kleineren Durchmessers des Gehäuses 12 des ersten Drucklufthebers 10 durch den Siphon 44 ersetzt worden ist. Es versteht sich, daß auch bei der zweiten Ausführungsform der Volumenstrom durch das Gehäuse 42 des Drucklufthebers 40 durch eine Steuereinrichtung gesteuert werden kann. Ferner können die freien Strömungsquerschnitte im Siphon 44 und dem Kopfstück 14 auf geeignete Weise aneinander angepaßt werden.

## Patentansprüche

1. Druckluftheber (10,40) zum Abfördern von Klarwasser aus einer Kleinkläranlage, **gekennzeichnet durch** einen in den Druckluftheber (10) integrierten UV-Desinfektionsreaktor (28) mit einer UV-Strahlungsquelle (26) zur Desinfektion des den Druckluftheber (10) durchströmenden Klarwassers.

2. Druckluftheber gemäß Anspruch 1, **dadurch gekennzeichnet, dass** der UV-Desinfektionsreaktor (28) ein rohr- oder schlauchförmiges Gehäuse (14) umfasst, in welchem die UV-Strahlungsquelle (26) angeordnet ist.

3. Druckluftheber gemäß Anspruch 2, **dadurch gekennzeichnet, dass** die UV-Strahlungsquelle (26) etwa stabförmig ausgebildet ist und sich in axialer Richtung im Innenraum des Gehäuses (14) erstreckt.

4. Druckluftheber gemäß Anspruch 3, **dadurch gekennzeichnet, dass** die UV-Strahlungsquelle (26) konzentrisch innerhalb eines freien Strömungsquerschnitts des Gehäuses (14) angeordnet ist.

5. Druckluftheber gemäß einem der Ansprüche 2 bis 4, **dadurch gekennzeichnet, daß** das Gehäuse (14) ein Kopfstück des Drucklufthebers (10,40) bildet, an welchem ein Klarwasser-Auslass (24) angeordnet ist.

6. Druckluftheber gemäß einem der Ansprüche 1 bis 5, **gekennzeichnet durch** eine Steuereinrichtung zur Steuerung der Intensität der UV-Strahlungsquelle und/oder des Volumenstroms **durch** den Druckluftheber (10,40).

7. Druckluftheber gemäß einem der Ansprüche 1 bis 6, **dadurch gekennzeichnet, daß** die UV-Strahlungsquelle (26) ultraviolettes Licht im Spektralbereich UV-C (Wellenlängenbereich von 100 nm bis 280 nm) emittiert.

8. Druckluftheber gemäß Anspruch 8, **dadurch gekennzeichnet, daß** die UV-Strahlungsquelle (26) ultraviolettes Licht mit einer Wellenlänge von 254 nm emittiert.

9. Kleinkläranlage, umfassend einen Druckluftheber (10,40) zum Abfördern von Klarwasser gemäss einem der vorhergehenden Ansprüche.
